# FASCICULE DE BREVET EUROPEEN

(11) **EP 3 285 940 B1**
(45) Date de publication et mention de la délivrance du brevet: **20.10.2021**
(21) Numéro de dépôt: 16721709.0
(22) Date de dépôt: 21.04.2016
(51) Int. Cl.: B21C 37/04, C21D 7/02, C22C 38/18, D07B 1/06

(54) **PROCÉDÉ DE TRÉFILAGE ET FIL OBTENU PAR CE PROCÉDÉ DE TRÉFILAGE**
ZIEHVERFAHREN UND NACH DIESEM ZIEHVERFAHREN HERGESTELLTER DRAHT
DRAWING PROCESS AND WIRE OBTAINED BY THIS DRAWING PROCESS

(30) Priorité: 24.04.2015 FR 1553711
(43) Date de publication de la demande: 28.02.2018
(73) Titulaire: Compagnie Générale des Etablissements Michelin, 63000 Clermont-Ferrand (FR)
(72) Inventeur: VERLEENE, Arnaud, 63040 Clermont-Ferrand Cedex 9 (FR); BUCHER, Laurent, 63040 Clermont-Ferrand Cedex 9 (FR); GIROUX, Olivier, 63040 Clermont-Ferrand Cedex 9 (FR)
(74) Mandataire: Louret, Sylvain
(86) Numéro de dépôt international: PCT/EP2016/058907
(87) Numéro de publication internationale: WO 2016/170062

(56) Documents cités:
- WO-A1-2015/075164
- DE-T2- 69 909 012
- US-A- 4 578 124

## Description

L'invention concerne un procédé de tréfilage d'un fil en acier ainsi qu'un fil en acier, notamment pour pneumatique.

Un pneumatique à armature de carcasse, par exemple radiale, comprend une bande de roulement, deux bourrelets inextensibles, deux flancs reliant les bourrelets à la bande de roulement et une armature de sommet, disposée circonférentiellement entre l'armature de carcasse et la bande de roulement.

L'armature de sommet et/ou de carcasse comprend une ou plusieurs nappes de caoutchouc, éventuellement renforcées par des éléments de renforcement ou renforts tels que des fils unitaires métalliques ou des câbles métalliques provenant de l'assemblage de plusieurs fils unitaires métalliques. Les renforts métalliques sont en acier.

L'armature de sommet est généralement constituée d'au moins deux nappes de sommet superposées, dites parfois nappes "de travail" ou nappes "croisées", dont les câbles de renforcement, en général métalliques, sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneu considéré. Les nappes croisées peuvent être complétées par diverses autres nappes ou couches de caoutchouc auxiliaires, de largeurs variables selon les cas, comportant ou non des renforts. On citera à titre d'exemple de simples coussins de gomme, des nappes dites "de protection" chargées de protéger le reste de l'armature de sommet des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Toutefois, ces renforts métalliques contribuent de façon significative à la masse du pneumatique que l'on souhaite alléger le plus possible, en améliorant, si possible, leur résistance mécanique.

Une première solution consiste à augmenter le taux en masse d'éléments de l'acier, par exemple de carbone, à hauteur de 0,9 %, voire plus, ce qui permet d'augmenter la résistance mécanique des fils, donc d'en réduire le diamètre et/ou la densité dans les nappes de renfort, et ainsi d'alléger le pneumatique. On obtient un pneumatique allégé mais présentant une endurance relativement modeste. En effet, les renforts métalliques sont plus sensibles à la fatigue et à la corrosion du fait de l'utilisation de taux de carbone en masse relativement élevé.

Afin de fabriquer de tels fils, on réalise une première série ininterrompue d'étapes de tréfilage du fil d'un diamètre D vers un diamètre d'. Puis, on traite thermiquement le fil de diamètre d' en chauffant le fil au-delà de la température d'austénitisation de l'acier puis en refroidissant le fil à une vitesse permettant d'obtenir une microstructure prédéterminée de l'acier. Ensuite on réalise une deuxième série ininterrompue d'étapes de tréfilage du fil de diamètre d' vers un diamètre d. En outre, préalablement à la deuxième série ininterrompue d'étapes de tréfilage, le procédé comprend une étape de revêtement par dépôts successifs d'une première couche de cuivre puis d'une deuxième couche de zinc ainsi qu'une étape de thermodiffusion du cuivre dans la deuxième couche et du zinc dans la première couche. Une telle étape de thermodiffusion est effectuée à environ 540°C ce qui peut provoquer une globulisation de la microstructure de l'acier, notamment lorsque celle-ci est ferrito-perlitique, et rendre les étapes de tréfilages ultérieures impossibles à une échelle industrielle.

Une deuxième solution consiste à utiliser des aciers comprenant un taux en masse élevé de chrome, par exemple décrits dans EP0648891. De tels aciers, généralement appelés aciers inoxydables, permettent d'atteindre une résistance mécanique relativement élevée ainsi qu'une résistance à la corrosion élevée du fait de la présence de chrome dans l'acier. Toutefois, le coût des aciers inoxydables est très élevé en raison de l'utilisation d'un taux élevé en masse de chrome.

L'invention a pour but de fournir un renfort métallique moins sensible à la fatigue et à la corrosion, peu coûteux et facile à tréfiler à une échelle industrielle.

A cet effet, l'invention a pour objet un procédé de tréfilage d'un fil d'acier conforme à la revendication 1.

Le fil utilisé présente un taux de carbone C en masse relativement faible. Ainsi, on améliore la tréfilabilité du fil, c'est-à-dire la possibilité d'obtenir un diamètre d relativement petit à partir d'un diamètre d' relativement grand. En d'autres termes, le taux de carbone C en masse relativement faible autorise une déformation rationnelle ε'=2 x ln(d'/d) élevée ce qui permet d'écrouir suffisamment le fil pour lui conférer des propriétés de résistance mécaniques suffisantes voire élevées, notamment une contrainte maximale avant rupture suffisamment élevée.

Même si sa contrainte maximale avant rupture peut être dans certains cas inférieure à celle de fils de l'état de la technique présentant un taux de carbone C en masse plus élevé, le fil obtenu par le procédé selon l'invention est beaucoup moins sensible à la fatigue et à la corrosion ce qui améliore l'endurance du pneumatique et compense son déficit initial en contrainte maximale avant rupture.

De plus, on peut réduire le diamètre du fil tout en conservant une résistance mécanique suffisante pour renforcer le pneumatique.

L'utilisation d'un acier présentant un taux de carbone en masse relativement faible permet d'obtenir un fil relativement peu onéreux contrairement à l'utilisation d'un acier inoxydable.

La température inférieure ou égale à 300°C lors de la ou de chaque étape intermédiaire permet d'éviter de modifier la microstructure de l'acier, par exemple par globulisation, ce qui aurait pour effet d'empêcher le tréfilage ultérieure du fil jusqu'à son diamètre final d à une échelle industrielle.

On pourra mesurer la température du fil par toute technique connue de l'homme du métier, par exemple par mesure à distance, par exemple par infrarouge ou bien par mesure au contact du fil après arrêt du défilement du fil, par exemple à l'aide d'un thermocouple.

Par série ininterrompue d'étapes de tréfilage, on entend que le fil effectue une série de passages successifs dans plusieurs filières de tréfilage, chaque passage dans chaque filière de tréfilage correspondant à une étape de tréfilage. Mis à part le dernier passage, chaque passage dans une filière est suivi directement par un passage dans la filière qui lui succède. Dans une série ininterrompue d'étapes de tréfilage, le fil ne subit aucune étape, en particulier de traitement thermique ou de revêtement, autre qu'une étape de tréfilage entre deux étapes de tréfilage de la série. En d'autres termes, le fil ne subit aucune étape, en particulier de traitement thermique ou de revêtement, entre deux étapes directement successives de tréfilage de la série.

La micro-structure de l'acier est intégralement de la ferrite, un mélange de ferrite et de cémentite ou un mélange de ferrite et de perlite. On observe cette micro-structure de préférence sur le fil de diamètre D ou d' et plus préférentiellement D.

Ainsi, la micro-structure de l'acier est dépourvue de martensite, qu'elle soit aciculaire ou globulaire, de bainite et d'austénite.

Une microstructure ferrito-martensitique, également appelée microstructure « Dual-Phase » en anglais, entraine des décohésion entre les phases ferritique et martensitique, notamment lors des étapes de tréfilage, ce qui n'est pas souhaitable.

Une microstucture martensitique n'est pas suffisamment ductile pour permettre un tréfilage du fil qui casserait trop fréquemment. En outre, afin d'obtenir une telle microstructure martensitique, il serait nécessaire de refroidir extrêmement rapidement l'acier ce qui, compte tenu du taux de carbone de l'acier selon l'invention, serait industriellement irréalisable.

Une microstructure austénitique est instable sans l'ajout d'élément(s) d'alliage, notamment de manganèse ou de nickel. Une telle microstructure austénitique serait donc plus coûteuse.

On distingue une micro-structure ferritique, ferrito-perlitique ou ferrito-cémentitique d'une autre micro-structure, en particulier martensitique ou bainitique par observation métallographique, de préférence sur le fil de diamètre d'. La micro-structure ferrito-perlitique présente des grains de ferrite ainsi que des zones perlitiques lamellaires. Au contraire, la micro-structure martensitique comprend des lattes et/ou des aiguilles que l'homme du métier saura distinguer des grains et des lamelles des micro-structures ferrito-perlitique et perlitique. Suite à une attaque chimique de l'acier par un mélange d'éthanol et d'acide nitrique, on reconnait les grains de cémentite qui apparaissent très foncés au microscope, dans tous les cas de façon plus foncée que les grains des autres microstructures, par exemple que les grains de ferrite qui apparaissent alors blancs.

Plus préférentiellement, lorsque le taux de carbone en masse C est tel que C ≤ 0,02 %, la microstructure de l'acier est intégralement ferritique ou ferrito-cémentitique avec, dans ce cas, au plus 0,3 % de cémentite.

Plus préférentiellement, lorsque le taux de carbone en masse C est tel que 0,02 % < C < 0,05 %, la microstructure de l'acier est intégralement ferritique ou ferrito-perlitique avec, dans ce cas, au plus 4 % de perlite.

Le taux de cémentite ou de perlite est déterminée par observation métallographique, de préférence sur le fil de diamètre D ou d' et plus préférentiellement D. On détermine alors la surface de cémentite ou de perlite par rapport à la surface de ferrite sur une coupe transversale du fil.

Le fil est en acier, c'est-à dire qu'il est constitué intégralement (pour 100% en masse) d'acier tel que défini, conformément à l'invention, dans la norme NF EN10020. Conformément à cette norme, un acier est un matériau contenant plus de fer que tout autre élément et dont la teneur en carbone est inférieure à 2% et qui contient d'autres éléments d'alliages. Toujours conformément à cette norme, l'acier comprend éventuellement d'autres éléments d'alliages.

De préférence l'acier est un acier non allié tel que défini dans la norme NF EN10020. Ainsi, l'acier comprend, en plus du carbone et du fer, d'autres éléments alliages connus dans des quantités conformes à la norme NF EN10020.

Dans un autre mode de réalisation, l'acier est un acier allié tel que défini dans la norme NF EN10020. Dans ce mode de réalisation, l'acier comprend, en plus du carbone et du fer, d'autres éléments alliages connus.

Dans encore un autre mode de réalisation l'acier est un acier inoxydable tel que défini dans la norme NF EN10020. Ainsi, dans ce mode de réalisation, l'acier comprend au moins 10,5% en masse de chrome et au maximum 1,2% en masse de carbone.

De préférence, le fil présente une température inférieure ou égale à 350°C et plus préférentiellement inférieure à 300°C lors de la ou de chaque étape intermédiaire.

Selon des caractéristiques optionnelles :
- d' est supérieur ou égal à 0,5 mm, de préférence à 1 mm et plus préférentiellement à 1,3 mm. Le diamètre d' est suffisamment grand pour obtenir des propriétés mécaniques élevées par écrouissage du fil.
- d' est inférieur ou égal à 2,5 mm,de préférence à 2,2 mm et plus préférentiellement à 2 mm. Le diamètre d' est suffisamment petit pour permettre l'écrouissage jusqu'au diamètre final du fil.

Selon une caractéristique optionnelle du procédé, on réalise la première série ininterrompue d'étapes de tréfilage du fil du diamètre D vers le diamètre d' en milieu sec.

Par tréfilage en milieu sec, on comprend que le fil circule dans un milieu gazeux, par exemple l'air ambiant. De préférence, le lubrifiant de tréfilage lors d'un tréfilage en milieu sec est sous forme pulvérulente. Lors d'un tréfilage en milieu sec, les moyens de tractions, par exemple des cabestants, sont exposés à l'air ambiant.

Selon une autre caractéristique optionnelle du procédé, on réalise la deuxième série ininterrompue d'étapes de tréfilage du fil du diamètre d' vers le diamètre d en milieu humide.

Par tréfilage en milieu humide, on comprend que le fil circule dans un milieu liquide, par exemple une solution aqueuse. De préférence, le lubrifiant de tréfilage lors d'un tréfilage en milieu humide est sous forme liquide. Lors d'un tréfilage en milieu humide, les moyens de tractions, par exemple des cabestans, sont exposés au milieu liquide, par exemple la solution aqueuse.

De telles étapes de tréfilage en milieu sec et humide ainsi que les moyens utilisés pour les mettre en œuvre sont notamment décrites en détails dans le document « Les Sélections - Techniques de l'Ingénieur, m3125, Tréfilage de l'acier, André Lefort ».

Dans un mode de réalisation, d' et d étant exprimés en mm, la déformation rationnelle ε'=2 x ln (d'/d) est telle que ε' > 3. De préférence ε' ≤ 5.

Dans certains modes de réalisation, ε' ≥ 3,5, plus préférentiellement ε' ≥ 3,7 et encore plus préférentiellement ε' ≥ 4. Dans certains autres modes de réalisation, ε' ≤ 4,7 et de préférence ε' ≤ 4,5.

Dans un mode de réalisation, D et d' étant exprimés en mm, la déformation rationnelle ε=2 x ln (D/d') est telle que ε ≥ 2. De préférence ε ≤ 5.

Dans certains modes de réalisation, de préférence dans ceux pour lesquels ε' ≥ 4 et plus préférentiellement ε' ≥ 4,5, D et d' étant exprimés en mm, la déformation rationnelle ε=2 x ln (D/d') est telle que ε ≤ 4, de préférence ε ≤ 3,5 et plus préférentiellement ε ≤ 3.

Dans d'autres modes de réalisation, de préférence dans ceux pour lesquels ε' ≤ 4,7, et plus préférentiellement dans ceux pour lesquels ε' ≤ 4,5, D et d' étant exprimés en mm, la déformation rationnelle ε=2 x ln (D/d') est telle que ε ≥ 2,3, de préférence ε ≥ 2,5 et plus préférentiellement ε ≥ 2,7.

Ainsi, on limite le tréfilage du fil depuis le diamètre D vers le diamètre d' ce qui permet d'écrouir suffisamment le fil lors de la deuxième série ininterrompue d'étapes de tréfilage du fil du diamètre d' vers le diamètre d pour augmenter sa contrainte mécanique avant rupture R.

De préférence, D et d étant exprimés en mm, la déformation rationnelle ε_{T} =2 x ln (D/d) est telle que ε_{T} ≥ 6, de préférence ε_{T} ≥ 6,5 et plus préférentiellement ε_{T} ≥ 7.

Dans des modes de réalisation préférés, ε_{T} ≤ 8.

De façon optionnelle, D est supérieur ou égal à 4 mm, de préférence à 5 mm.

De préférence, la ou les étapes intermédiaires ne comprennent pas d'étape de chauffage de l'acier au-delà de sa température d'austénitisation.

Ainsi, la ou les étapes intermédiaires ne comprennent pas d'étape appelée généralement étape de traitement thermique au cours de laquelle on chauffe le fil au-delà de sa température d'austénitisation pour obtenir une microstructure austénitique puis on refroidit le fil pour obtenir une microstructure prédéterminée. La température d'austénitisation est généralement comprise entre 700 et 900 °C.

Conformément à l'invention, la ou les étapes intermédiaires comprennent une étape de revêtement du fil de diamètre d' d'au moins une couche métallique.

Conformément à l'invention, l'étape de revêtement du fil de diamètre d' est choisie parmi une étape de dépôt d'une couche d'un alliage de métaux sensiblement purs, une étape de dépôt d'une première couche d'un premier métal sensiblement pur suivie d'une étape de dépôt d'une deuxième couche d'un deuxième métal sensiblement pur, une étape de dépôt d'une couche d'un métal sensiblement pur.

Par métal sensiblement pur, on entend un métal comprenant au moins 90%, de préférence au moins 95% et préférentiellement au moins 99% d'un unique élément chimique métallique. Par un alliage de métaux sensiblement purs, on entend un mélange d'au moins deux métaux distincts, chaque métal étant sensiblement pur, et constituant à eux deux plus de 50 % en masse de l'alliage. Ainsi, un alliage peut comprendre des additifs apportant des propriétés spécifiques à l'alliage en fonction de son utilisation.

Par exemple, l'étape de dépôt d'une couche d'un alliage de métaux sensiblement purs peut être une étape de dépôt d'une couche de l'alliage, par exemple du laiton ou du bronze. Ce type d'étape de dépôt est généralement appelé co-dépôt car on dépose simultanément les métaux sensiblement purs constituants l'alliage à partir de pépites de l'alliage.

Par exemple, les métaux sensiblement purs sont sélectionnés parmi le cuivre, le zinc, l'étain, l'aluminium, le cobalt et le nickel et de préférence parmi le cuivre, le zinc et l'étain.

Dans un mode de réalisation préféré, l'étape de revêtement du fil de diamètre d' comprenant une étape de dépôt d'une première couche d'un premier métal sensiblement pur suivie d'une étape de dépôt d'une deuxième couche d'un deuxième métal sensiblement pur, la ou les étapes intermédiaires ne comprennent pas d'étape de thermodiffusion de chaque premier et deuxième métal respectivement dans la deuxième et la première couche.

L'invention a également pour objet un fil d'acier tel que défini dans la norme NF EN10020 de diamètre d exprimé en mm, présentant une microstructure intégralement ferritique, un mélange de ferrite et de cémentite ou un mélange de ferrite et de perlite, le fil étant revêtu d'un revêtement choisi parmi une couche d'un alliage de métaux sensiblement purs et une couche d'un métal sensiblement pur, -et présentant un taux de carbone en masse C tel que C<0,05 %, un taux de chrome en masse Cr tel que Cr < 12 % et une contrainte maximale avant rupture R, exprimée en MPa, telle que R ≥ A + 910.C - 600.ln(d) avecA=200.

La contrainte maximale à la rupture ou limite de rupture correspond à la force nécessaire pour faire rompre le fil. Les mesures de contrainte maximale avant rupture notée R (en MPa) sont effectuées selon la norme ISO 6892 de 1984.

Un tel fil est peu sensible à la fatigue et à la corrosion, peu coûteux et facile à fabriquer par tréfilage à une échelle industrielle.

Dans un mode de réalisation, le fil présente un taux de carbone en masse C tel que 0,01 % ≤ C < 0,05 %, de préférence 0,01 % ≤ C ≤ 0,045 % et plus préférentiellement 0,01 % ≤ C ≤ 0,04 %.

Avantageusement, A=400, de préférence A=600 et plus préférentiellement A=700.

Avantageusement, R ≥ 1000 MPa, de préférence R ≥ 1600 MPa et plus préférentiellement R ≥ 1800 MPa.

Avantageusement, d est supérieur ou égal à 0,10 mm et de préférence à 0,12 mm.

Lorsque le diamètre d est trop petit, le coût de revient industriel du fil devient trop important et incompatible avec une production de masse.

Avantageusement, d est inférieur ou égal à 0,40 mm, de préférence à 0,25 mm, plus préférentiellement à 0,23 mm et encore plus préférentiellement à 0,20 mm.

Lorsque le diamètre d est trop grand, la flexibilité et l'endurance du fil sont trop faibles pour une utilisation du fil dans certaines nappes du pneumatique, notamment l'armature de carcasse, par exemple pour véhicule de type poids lourd.

Un autre objet de l'invention est un câble comprenant plusieurs fils tels que définis ci-dessus.

Par exemple, les câbles sont du type à couches ou du type à torons.

On rappelle qu'il existe deux techniques possibles d'assemblage de fils ou de torons:
- soit par câblage: dans un tel cas, les fils ou torons ne subissent pas de torsion autour de leur propre axe, en raison d'une rotation synchrone avant et après le point d'assemblage ;
- soit par retordage : dans un tel cas, les fils ou torons subissent à la fois une torsion collective et une torsion individuelle autour de leur propre axe, ce qui génère un couple de détorsion sur chacun des fils ou torons.

L'invention a également pour objet un élément semi-fini, comprenant une matrice en caoutchouc dans lequel est noyé au moins un fil tel que défini ci-dessus.

La matrice en caoutchouc comprend au moins un élastomère diénique, une charge renforçante, un système de vulcanisation et divers additifs.

Par élastomère diénique de la matrice en caoutchouc, on entend de manière générale un élastomère issu au moins en partie (i.e. un homopolymère ou un copolymère) de monomères diènes (monomères porteurs de deux doubles liaisons carbone-carbone, conjuguées ou non).

Les élastomères diéniques, de manière connue, peuvent être classés en deux catégories : ceux dits "essentiellement insaturés" et ceux dits "essentiellement saturés". De manière particulièrement préférentielle, l'élastomère diénique de la matrice en caoutchouc est choisi dans le groupe des élastomères diéniques (essentiellement insaturés) constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

La matrice en caoutchouc peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

A titre de charge renforçante, on utilise préférentiellement du noir de carbone ou une charge inorganique. Plus particulièrement, comme noirs de carbone conviennent tous les noirs de carbone, notamment les noirs du type HAF, ISAF, SAF, conventionnellement utilisés dans les pneumatiques. A titre d'exemples non limitatifs de tels noirs, on peut citer les noirs N115, N134, N234, N330, N339, N347, N375. Cependant le noir de carbone peut bien entendu être utilisé en coupage avec des charges renforçante et en particulier d'autres charges inorganiques. De telles charges inorganiques comprennent de la silice, notamment des silices hautement dispersibles, par exemple les silices Ultrasil 7000 et Ultrasil 7005 de la société Degussa.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

A la charge renforçante peuvent être également ajoutés, selon l'application visée, des charges inertes (non renforçantes) telles que particules d'argile, bentonite, talc, craie, kaolin, utilisables par exemple dans des flancs ou des bandes de roulement de pneumatiques colorés.

La matrice en caoutchouc peut comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novalaque) ou des donneurs de méthylène (par exemple HMT ou H3M) tels que décrits par exemple dans la demande WO 02/10269 (ou US2003-0212185).

La matrice en caoutchouc comprend également un système de vulcanisation à base soit de soufre, soit de donneurs de soufre et/ou de peroxyde et/ou de bismaléimides, des accélérateurs de vulcanisation, des activateurs de vulcanisation.

Le système de vulcanisation proprement dit est préférentiellement à base de soufre et d'un accélérateur primaire de vulcanisation, en particulier d'un accélérateur du type sulfénamide, tel que choisi dans le groupe constitué par disulfure de 2-mercaptobenzothiazyle (MBTS), N-cyclohexyl-2-benzothiazyle sulfénamide (CBS), N,N-dicyclohexyl-2-benzothiazyle sulfénamide (DCBS), N-ter-butyl-2-benzothiazyle sulfénamide (TBBS), N-ter-butyl-2-benzothiazyle sulfénimide (TBSI) et les mélanges de ces composés.

L'invention a pour autre objet un pneumatique comprenant au moins un fil tel que défini ci-dessus.

De préférence, le pneumatique est destiné à des véhicules de tourisme, des véhicule industriels choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention. Plus préférentiellement, le pneumatique est destiné à des véhicules lourds, engins agricoles ou de génie civil, aéronef, autres véhicules de transport ou de manutention.

De préférence, le fil est destiné à renforcer une armature de sommet et/ou de carcasse de pneumatique. Plus préférentiellement, le fil est destiné à renforcer une armature de carcasse de pneumatique.

De préférence, le pneumatique est pour un véhicule de type poids-lourd comprenant une armature de carcasse comprenant au moins un fil tel que décrit ci-dessus.

L'invention sera mieux comprise à la lecture de la description qui va suivre, donnée uniquement à titre d'exemple non limitatif et faite en se référant aux dessins dans lesquels :
- la figure 1 une vue en coupe perpendiculaire à la direction circonférentielle d'un pneumatique selon l'invention ;
- la figure 2 est un diagramme illustrant des étapes d'un procédé de tréfilage selon l'invention ;
- la figure 3 est une vue au microscope optique d'une micro-structure ferrito-perlitique ;
- la figure 4 est une vue au microscope électronique à balayage d'une micro-structure ferrito-perlitique ; et
- la figure 5 est une vue au microscope optique d'une micro-structure ferritique aciculaire (dite de Windmanstätten).

### EXEMPLE DE PNEUMATIQUE SELON L'INVENTION

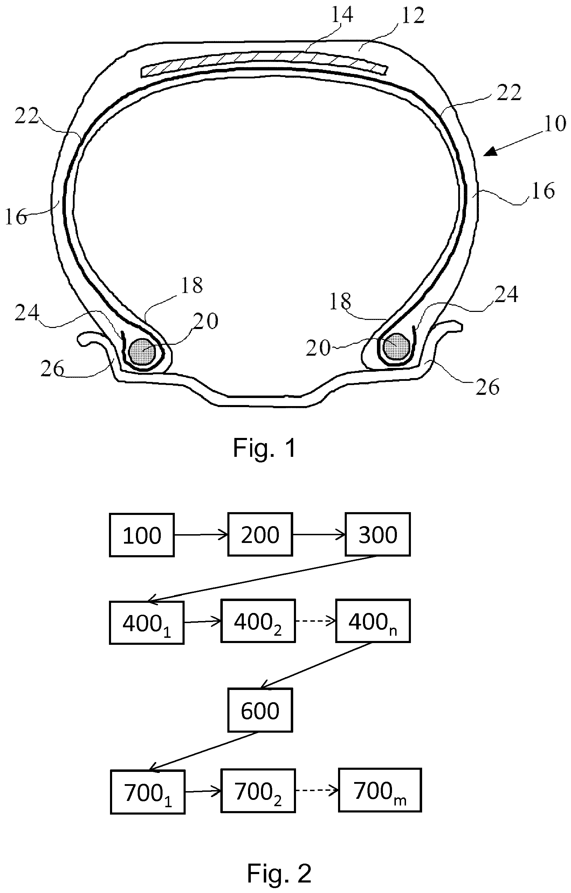

On a représenté sur la figure 1 un pneumatique comprenant des fils obtenus par le procédé selon l'invention et désigné par la référence générale 10.

Le pneumatique 10 comporte un sommet 12 renforcé par une armature de sommet 14, deux flancs 16 et deux bourrelets 18, chacun de ces bourrelets 18 étant renforcé avec une tringle 20. Le sommet 12 est surmonté d'une bande de roulement non représentée sur cette figure schématique. Une armature de carcasse 22 est enroulée autour des deux tringles 20 dans chaque bourrelet 18 et comprend un retournement 24 disposé vers l'extérieur du pneumatique 10 qui est ici représenté monté sur une jante 26.

L'armature de carcasse 22 est de manière connue en soi constituée d'au moins une nappe renforcée par des fils ou des câbles. Ces fils ou câbles de l'armature de carcasse sont dits "radiaux", c'est-à-dire que ces fils ou câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 18 et passe par le milieu de l'armature de sommet 14).

L'armature de sommet 14 comporte au moins une nappe renforcée par des fils ou des câbles conformes à l'invention. Dans cette armature de sommet 14 schématisée de manière très simple sur la figure 1, on comprendra que les fils ou câbles de l'invention peuvent par exemple renforcer tout ou partie des nappes sommet de travail, ou des nappes (ou demi-nappes) sommet de triangulation et/ou des nappes sommet de protection, lorsque de telles nappes sommet de triangulation ou de protection sont utilisées. Outre les nappes de travail, celles de triangulation et/ou de protection, l'armature de sommet 14 du pneumatique de l'invention peut bien entendu comporter d'autres nappes sommet, par exemple une ou plusieurs nappes sommet de frettage.

Bien entendu, le pneumatique 10 comporte en outre de manière connue une couche de gomme ou élastomère intérieure (communément appelée "gomme intérieure") qui définit la face radialement interne du pneumatique et qui est destinée à protéger l'armature de carcasse de la diffusion d'air provenant de l'espace intérieur au pneumatique. Avantageusement, en particulier dans le cas d'un pneumatique pour véhicule Poids-lourd, il peut comporter en outre une couche élastomère intermédiaire de renfort qui est située entre l'armature de carcasse et la couche intérieure, destinée à renforcer la couche intérieure et, par conséquent, l'armature de carcasse, également destinée à délocaliser partiellement les efforts subis par l'armature de carcasse.

Le pneumatique est fabriqué par assemblage des différents éléments décrits ci-dessus présents sous forme d'éléments semi-finis comprenant une matrice de caoutchouc dans laquelle sont noyés les fils ou les câbles.

### EXEMPLE DE CABLE SELON L'INVENTION

Dans le cas où l'armature de sommet et/ou de carcasse est renforcée par des câbles, ceux-ci sont fabriqués par assemblage de plusieurs fils d'acier conformes à l'invention, soit par câblage, soit par retordage.

Dans le cas d'un pneumatique pour des véhicules industriels choisis parmi des camionnettes, des véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention, l'armature de sommet et/ou de carcasse est renforcée par des câbles conformes à l'invention notamment choisis parmi les câbles à couches de structure 1+3+8, 1+6+11, 1+6+12, 2+7, 3+8, 3+9, 3+9+15 et les câbles à torons de structure 3 x (1+5), (1+6) x (3+8), (1+6) x (3+9+15), (1+6) x (4+10+16). D'autres câbles pouvant renforcer l'armature de sommet et/ou de carcasse sont également décrits dans le document WO 2010/139583.

Dans le cas d'un pneumatique pour des véhicules de tourisme, l'armature de sommet et/ou de carcasse est renforcée par des câbles conformes à l'invention et notamment choisis parmi les câbles de structure 2+1, 2+2, 2+4 et 4x3.

Les câbles conformes à l'invention peuvent être gommés *in situ,* comme cela est décrit, entre autres, dans le document WO 2010/139583.

L'armature de sommet et/ou de carcasse peut également être renforcée par un ou plusieurs fils unitaires conformes à l'invention mais non assemblés.

### EXEMPLE DE FIL SELON L'INVENTION

Le fil est en acier. L'acier est un acier non allié tel que défini dans la norme NF EN10020. Des fils en acier allié ou inoxydable tels que définis dans la norme NF EN10020 sont également envisageables.

L'acier utilisé peut donc comprendre préférentiellement des éléments d'alliages connus tels que par exemple Mn, Si, P, S, N, V, Cr, Mo, Ni, B et Co (voir par exemple *Research Disclosure* 34984 - *"Micro-alloyed steel cord constructions for tyres"* - mai 1993 ; *Research Disclosure* 34054 - *"High tensile strength steel cord constructions for tyres"* - août 1992) permettant d'adapter l'acier.

L'acier préférentiel non allié conforme à la norme NF EN10020 comprend au plus 1,65%, préférentiellement au plus 1,30% et encore plus préférentiellement au plus 1% et très préférentiellement au plus 0,5% en masse, ici 0,273% en masse de Mn.

L'acier préférentiel non allié conforme à la norme NF EN10020 comprend au plus 0,60% en masse, ici 0,039% en masse de Si.

L'acier préférentiel non allié conforme à la norme NF EN10020 comprend au plus 0,10% en masse, ici 0,011% en masse de P.

L'acier préférentiel non allié conforme à la norme NF EN10020 comprend au plus 0,10% en masse, ici 0,011% en masse de S.

L'acier préférentiel non allié conforme à la norme NF EN10020 comprend au plus 0,10% en masse d'azote, au plus 0,10% en masse de vanadium, au plus 0,30% en masse de chrome, au plus 0,08% borne incluse en masse de molybdène, au plus 0,3% borne incluse en masse de nickel, au plus 0,0008% borne incluse en masse de bore et au plus 0,3% borne incluse en masse de cobalt. Ici, l'acier non allié comprend des quantités négligeables d'azote, de vanadium, de chrome, de molybdène, de nickel, de bore et de cobalt présents sous forme d'impuretés.

Dans le cas d'un acier allié conforme à la norme NF EN10020, l'acier utilisé comprend un taux de chrome en masse Cr tel que Cr < 10,5 %, de préférence tel que Cr ≤ 5%, plus préférentiellement tel que Cr ≤ 1%, et encore plus préférentiellement tel que Cr ≤ 0,2%.

Les valeurs des taux en masse des éléments décrits ci-dessus peuvent être mesurés selon la norme FD CEN/TR 10261 intitulée «Aciers et fontes - Normes européennes pour la détermination de la composition chimique ».

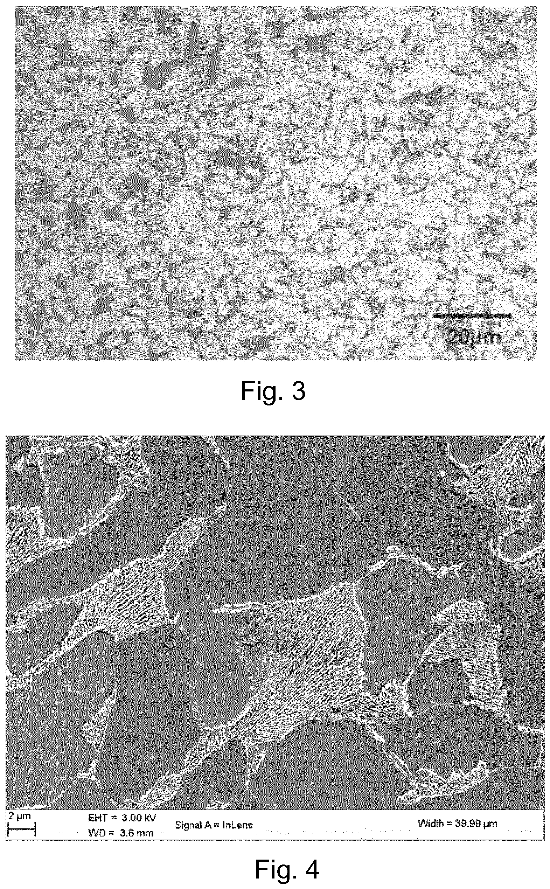

La microstructure de l'acier est choisie parmi la ferrite, un mélange de ferrite et de cémentite ou un mélange de ferrite et de perlite. Le fil est préférentiellement en acier ferritique, illustré sur les figures 3 et 4. L'acier utilisé comprend un taux de carbone C, exprimé en %, en masse d'acier tel que C<0,05 %. De préférence, 0,01 % ≤ C < 0,05 %, préférentiellement 0,01 % ≤ C ≤ 0,045 % et encore plus préférentiellement 0,01 % ≤ C ≤ 0,045 %.

Le fil selon l'invention est revêtu d'une couche métallique améliorant par exemple les propriétés de mise en œuvre du fil, ou les propriétés d'usage du fil, du câble et/ou du pneumatique eux-mêmes, telles que les propriétés d'adhésion, de résistance à la corrosion ou encore de résistance au vieillissement. Le fil est revêtu d'un revêtement choisi parmi une couche d'un alliage de métaux sensiblement purs, par exemple du laiton ou du bronze, et une couche d'un métal sensiblement pur, par exemple du zinc.

On a rassemblé dans le tableau 1 ci-dessous des fils EDT1, EDT2 selon l'état de la technique et F1 selon l'invention.

Les fils des exemples du tableau 1 présentent un diamètre d supérieur ou égal à 0,10 mm et de préférence à 0,12 mm. En outre, les fils des exemples du tableau 1 présentent un diamètre d inférieur ou égal à 0,40 mm, de préférence à 0,25 mm, plus préférentiellement à 0,23 mm et encore plus préférentiellement à 0,20 mm.

**Tableau 1**

| | **EDT 1** | **EDT 2** | **F1** | **F2** |
|---|---|---|---|---|
| **C(%)** | 0,71 | 0,585 | 0,03 | 0,03 |
| **d (mm)** | 0,18 | 0,18 | 0,15 | 0,18 |
| **R (MPa)** | 2820 | 2903 | 1901 | 1907 |

Le fils F1 est tel que la contrainte maximale avant rupture R du fil, exprimée en MPa, est telle que R ≥ A + 910.C - 600.ln(d) avec A=200 et d exprimé en mm.

On notera que le fil F1 est tel que A=400, de préférence A=600 et plus préférentiellement A=700.

On notera que les fils F1 et F2 sont tels que R ≥ 1000 MPa, de préférence R ≥ 1600 MPa et plus préférentiellement R ≥ 1800 MPa.

### EXEMPLE DE PROCEDE DE TREFILAGE DU FIL SELON L'INVENTION

On a représenté sur la figure 2 un diagramme d'un procédé permettant de tréfiler les fils tels que décrits ci-dessus.

Dans une étape 100 de déroulage, on déroule un fil d'acier de diamètre initial D≥4, de préférence D≥5, ici égal à 5,5 mm et présentant une contrainte maximale à la rupture comprise entre 300 MPa et 700 MPa. Le fil, appelé fil machine, est stocké sous forme d'une botte sur un dévidoir à partir duquel on le déroule grâce à des moyens automatisés de déroulage, par exemple un dérouleur. La micro-structure de l'acier est alors ferrito-perlitique.

Dans une étape 200 de décalaminage du fil machine, on fait passer le fil machine dans plusieurs poulies successives et dans deux dresseurs formés chacun par plusieurs poulies, les poulies de chaque dresseur étant montées en rotation selon un axe perpendiculaire à l'axe de rotation des poulies de l'autre dresseur. On enlève ainsi une couche d'oxydes de fer, appelé calamine, présente en surface du fil machine.

Dans une étape 300, on revêt le fil machine d'une couche d'un promoteur d'adhésion d'un lubrifiant de tréfilage.

Les étapes 400₁ à 400ₙ ont pour but de réduire le diamètre du fil du diamètre initial D vers un diamètre intermédiaire d', par exemple supérieur ou égal à 0,5 mm, de préférence à 1 mm et plus préférentiellement à 1,3 mm et par exemple inférieur ou égal à 2,5 mm, de préférence à 2,2 mm et plus préférentiellement à 2 mm.

Les étapes 400₁ à 400ₙ (n variant de 6 à 12) forment une première série ininterrompue d'étapes de tréfilage en milieu sec du fil du diamètre initial D vers le diamètre intermédiaire d'. Chaque étape 400₁ à 400ₙ est une étape de tréfilage en milieu sec dans laquelle on fait passer le fil dans une filière de diamètre inférieur au diamètre du fil en amont de la filière. Ainsi, le fil présente un diamètre en aval de la filière inférieur au diamètre en amont de la filière. Le diamètre de chaque filière est inférieur au diamètre de la filière située en amont. Pour la première série ininterrompue d'étapes de tréfilage en milieu sec du fil du diamètre initial D vers le diamètre intermédiaire d', on définit la déformation rationnelle ε=2 x ln(D/d').

Des moyens de traction du fil positionnés en aval de chaque filière, ici des cabestans, permettent d'exercer une force de traction suffisante pour tirer le fil à travers chaque filière. On utilise un lubrifiant de tréfilage sous forme pulvérulente.

Dans une étape 600, on revêt le fil de diamètre intermédiaire d' d'au moins une couche métallique. L'étape de revêtement 600 du fil de diamètre intermédiaire d' est choisie parmi une étape de dépôt d'une couche d'un alliage de métaux sensiblement purs, une étape de dépôt d'une première couche d'un premier métal sensiblement pur suivie d'une étape de dépôt d'une deuxième couche d'un deuxième métal sensiblement pur, une étape de dépôt d'une couche d'un métal sensiblement pur. Ici, l'étape de revêtement 600 du fil de diamètre intermédiaire d'est une étape de dépôt une étape de dépôt d'une première couche d'un premier métal sensiblement pur suivie d'une étape de dépôt d'une deuxième couche d'un deuxième métal sensiblement pur, ici une couche de cuivre puis une couche de zinc.

Les étapes 700₁ à 700ₘ (m variant par exemple de 8 à 23) ont pour but de réduire le diamètre du fil du diamètre intermédiaire d' vers le diamètre final d et d'augmenter la contrainte maximale à rupture du fil.

Les étapes 700₁ à 700ₘ forment une deuxième série ininterrompue d'étapes de tréfilage en milieu humide du fil du diamètre intermédiaire d' vers le diamètre final d. Chaque étape 700₁ à 700ₘ est une étape de tréfilage en milieu humide dans laquelle on fait passer le fil dans une filière de diamètre inférieur au diamètre du fil en amont de la filière. Ainsi, le fil présente un diamètre en aval de la filière inférieur au diamètre en amont de la filière. Le diamètre de chaque filière est inférieur au diamètre de la filière située en amont. Pour la deuxième série ininterrompue d'étapes de tréfilage en milieu humide du fil du diamètre intermédiaire d' vers le diamètre final d, on définit la déformation rationnelle ε'=2 x ln(d'/d).

En variante, on réalisera les étapes 700₁ à 700ₘ en milieu sec.

Des moyens de traction du fil positionnés en aval de chaque filière, ici des cabestans à étages, permettent d'exercer une force de traction suffisante pour tirer le fil à travers chaque filière. Les moyens de tractions et les filières sont immergés dans un bain liquide de lubrifiant de tréfilage, par exemple tel que décrit dans le document WO 2008/113481.

Le procédé de tréfilage comprend ainsi N séries ininterrompues d'étapes de tréfilage, par exemple une en milieu sec et une en milieu humide. Ici N=2. Ainsi, on peut définir la déformation rationnelle totale pour le procédé de tréfilage ε_{T} =2 x ln(D/d).

Ainsi, le procédé comprend une ou plusieurs étapes intermédiaires entre les première et deuxième séries ininterrompues d'étapes 400₁ - 400ₘ, 700₁ - 700ₘ de tréfilage du fil. Lors de la ou de chacune de ces étapes intermédiaires, le fil présente une température inférieure ou égale à 300°C. Ici, le procédé comprend une seule étape intermédiaire, ici l'étape de revêtement 600, durant laquelle le fil présente une température comprise entre 15°C et 300°C et de préférence entre 15°C et 200°C.

La ou les étapes intermédiaires ne comprennent pas d'étape de thermodiffusion de chaque premier et deuxième métal respectivement dans la deuxième et la première couche, ici du cuivre dans la deuxième couche et de zinc dans la première couche.

La ou les étapes intermédiaires ne comprennent pas non plus d'étape de chauffage de l'acier au-delà de sa température d'austénitisation. De telles étapes d'austénitisation sont décrites notamment dans « Précis de métallurgie », ISBN 2-12-260121-6 ainsi que dans "Atlas des courbes de transformation des aciers de fabrication française", IRDIS, 1974.

Une telle étape de chauffage est bien connue de l'homme du métier lors des traitements thermiques comme décrit notamment dans « Les principes de base du traitement thermique des aciers », André Constant et Guy Henry, ISBN 2-85330-083-8.

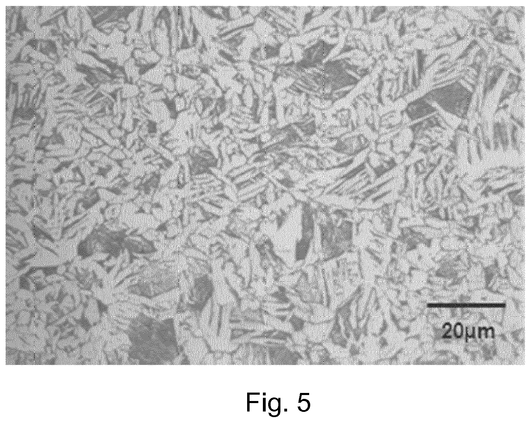

L'absence de traitement thermique comprenant généralement une étape de chauffage au-delà de la température d'austénitisation de l'acier puis une étape de refroidissement permet d'éviter les problèmes associés. Ainsi, si l'austénisation n'est pas suffisante, il subsiste des bandes non recristallisées et l'austénite obtenue n'est pas homogène ce qui nuit au tréfilage ultérieur. Si l'austénisation est trop importante, la micro-structure obtenue lors refroidissement ultérieur est une ferrite aciculaire (dite de Windmanstätten), illustrée sur la figure 5, et pas une structure ferrito-perlitique.

On a rassemblé dans le tableau 2 différentes valeurs des caractéristiques des fils selon l'invention et de l'état de la technique.

**Tableau 2**

| | **EDT1** | **EDT2** | **F1** | **F2** |
|---|---|---|---|---|
| **C (%)** | 0,71 | 0,585 | 0,03 | 0,03 |
| **d' (mm)** | 1 | 1,3 | 1,3 | 1,3 |
| **d (mm)** | 0,18 | 0,18 | 0,15 | 0,18 |
| **ε** | 2,6 | 2,8 | 2,9 | 2,9 |
| **ε'** | 3,6 | 4 | 4,3 | 4,0 |
| **ε_{T}** | 6,2 | 6,8 | 7,2 | 6,9 |

On notera que la déformation rationnelle ε'=2 x ln (d'/d) est telle que 3 < ε' ≤ 5 pour les fils F1 et F2. De préférence, ε' ≥ 3,5, plus préférentiellement ε' ≥ 3,7 et encore plus préférentiellement ε' ≥ 4 pour les fils F1 et F2. On notera également que ε' ≤ 4,7 et de préférence ε' ≤ 4,5 pour les fils F1 et F2.

On notera que la déformation rationnelle ε=2 x ln (D/d') est telle que 2 ≤ ε ≤ 5 pour les fils F1 et F2.

On notera également que, pour les fils F1 et F2, lorsque ε' ≥ 3,5, de préférence ε' ≥ 3,7 et plus préférentiellement ε' ≥ 4, la déformation rationnelle ε=2 x ln (D/d') est telle que ε ≤ 4, de préférence ε ≤ 3,5 et plus préférentiellement ε ≤ 3.

On notera également que, pour les fils F1 et F2, lorsque ε' ≤ 4,7, de préférence ε' ≤ 4,5, la déformation rationnelle ε=2 x ln (D/d') est telle que ε ≥ 2,3, de préférence ε ≥ 2,5 et plus préférentiellement ε ≥ 2,7.

On notera également que, pour le fil F1, ε_{T} ≥ 6,5, de préférence ε_{T} ≥ 6,75. On notera que pour le fil F1, on a plus préférentiellement ε_{T} ≥ 7,2. On notera également que ε_{T} ≤ 8 pour les fils F1 et F2.

### TESTS ET ESSAIS COMPARATIFS

On a comparé les fils de l'état de la technique et les fils F1 et F2 au cours d'un test de flexion rotative réalisé en atmosphère humide (au moins 60% d'humidité relative). Ce test permet de mesurer la contrainte maximale d'endurance en flexion rotative en milieu humide σ_{F}* de chaque fil testé. Au cours de ce test, on impose 10⁵ cycles au fil testé autour de son axe de révolution à une contrainte prédéterminée. Si le fil rompt, on recommence le test avec une contrainte moins élevée et si le fil ne rompt pas, on recommence le test avec une contrainte plus élevée. On détermine ainsi de proche en proche, par exemple, par la méthode dite de l'escalier, la valeur de σ_{F}*. On a rassemblé les résultats de ce test dans le tableau 3 ci-dessous.

**Tableau 3**

| | **EDT1** | **EDT2** | **F1** | **F2** |
|---|---|---|---|---|
| **C (%)** | 0,71 | 0,585 | 0,03 | 0,03 |
| **d (mm)** | 0,18 | 0,18 | 0,15 | 0,18 |
| **R (MPa)** | 2820 | 2903 | 1901 | 1907 |
| **σ_{F}* (MPa)** | < 500 | < 500 | 1004 | 995 |

En milieu humide, les fils F1et F2 selon l'invention rompt à des contraintes significativement plus élevées que ceux de l'état de la technique, illustrant ainsi un des avantages de l'invention. Ainsi, même si la contrainte à rupture initiale des fils F1 et F2 selon l'invention est inférieure à celle des fils EDT1 et EDT2, l'endurance en fatigue-corrosion des fils F1 et F2est nettement supérieure à celle des fils EDT1 et EDT2.

L'invention ne se limite pas aux modes de réalisation précédemment décrits.

En effet, l'étape 200 de décalaminage peut être réalisée par action d'un agent chimique, par exemple de l'acide.

Des moyens de traction du fil positionnés en aval de chaque filière, ici des cabestans à étages, permettent d'exercer une force de traction suffisante pour tirer le fil à travers chaque filière. Les moyens de tractions et les filières sont immergés dans un bain liquide de lubrifiant de tréfilage, par exemple tel que décrit dans le document WO 2008/113481.

Le procédé de tréfilage comprend ainsi N séries ininterrompues d'étapes de tréfilage, par exemple une en milieu sec et une en milieu humide. Ici N=2. Ainsi, on peut définir la déformation rationnelle totale pour le procédé de tréfilage ε_{T} =2 x ln(D/d).

Ainsi, le procédé comprend une ou plusieurs étapes intermédiaires entre les première et deuxième séries ininterrompues d'étapes 400₁ - 400ₘ, 700₁ - 700ₘ de tréfilage du fil. Lors de la ou de chacune de ces étapes intermédiaires, le fil présente une température inférieure ou égale à 300°C. Ici, le procédé comprend une seule étape intermédiaire, ici l'étape de revêtement 600, durant laquelle le fil présente une température comprise entre 15°C et 300°C et de préférence entre 15°C et 200°C.

La ou les étapes intermédiaires ne comprennent pas d'étape de thermodiffusion de chaque premier et deuxième métal respectivement dans la deuxième et la première couche, ici du cuivre dans la deuxième couche et de zinc dans la première couche.

La ou les étapes intermédiaires ne comprennent pas non plus d'étape de chauffage de l'acier au-delà de sa température d'austénitisation. De telles étapes d'austénitisation sont décrites notamment dans « Précis de métallurgie », ISBN 2-12-260121-6 ainsi que dans "Atlas des courbes de transformation des aciers de fabrication française", IRDIS, 1974.

Une telle étape de chauffage est bien connue de l'homme du métier lors des traitements thermiques comme décrit notamment dans « Les principes de base du traitement thermique des aciers », André Constant et Guy Henry, ISBN 2-85330-083-8.

L'absence de traitement thermique comprenant généralement une étape de chauffage au-delà de la température d'austénitisation de l'acier puis une étape de refroidissement permet d'éviter les problèmes associés. Ainsi, si l'austénisation n'est pas suffisante, il subsiste des bandes non recristallisées et l'austénite obtenue n'est pas homogène ce qui nuit au tréfilage ultérieur. Si l'austénisation est trop importante, la micro-structure obtenue lors refroidissement ultérieur est une ferrite aciculaire (dite de Windmanstätten), illustrée sur la figure 5, et pas une structure ferrito-perlitique.

On a rassemblé dans le tableau 2 différentes valeurs des caractéristiques des fils selon l'invention et de l'état de la technique.

**Tableau 2**

| | **EDT1** | **EDT2** | **F1** | **F2** |
|---|---|---|---|---|
| **C (%)** | 0,71 | 0,585 | 0,03 | 0,03 |
| **d' (mm)** | 1 | 1,3 | 1,3 | 1,3 |
| **d (mm)** | 0,18 | 0,18 | 0,15 | 0,18 |
| **ε** | 2,6 | 2,8 | 2,9 | 2,9 |
| **ε'** | 3,6 | 4 | 4,3 | 4,0 |
| **ε_{T}** | 6,2 | 6,8 | 7,2 | 6,9 |

On notera que la déformation rationnelle ε'=2 x ln (d'/d) est telle que 3 < ε' ≤ 5 pour les fils F1 et F2. De préférence, ε' ≥ 3,5, plus préférentiellement ε' ≥ 3,7 et encore plus préférentiellement ε' ≥ 4 pour les fils F1 et F2. On notera également que ε' ≤ 4,7 et de préférence ε' ≤ 4,5 pour les fils F1 et F2.

On notera que la déformation rationnelle ε=2 x ln (D/d') est telle que 2 ≤ ε ≤ 5 pour les fils F1 et F2.

On notera également que, pour les fils F1 et F2, lorsque ε' ≥ 3,5, de préférence ε' ≥ 3,7 et plus préférentiellement ε' ≥ 4, la déformation rationnelle ε=2 x ln (D/d') est telle que ε ≤ 4, de préférence ε ≤ 3,5 et plus préférentiellement ε ≤ 3.

On notera également que, pour les fils F1 et F2, lorsque ε' ≤ 4,7, de préférence ε' ≤ 4,5, la déformation rationnelle ε=2 x ln (D/d') est telle que ε ≥ 2,3, de préférence ε ≥ 2,5 et plus préférentiellement ε ≥ 2,7.

On notera également que, pour le fil F1, ε_{T} ≥ 6,5, de préférence ε_{T} ≥ 6,75. On notera que pour le fil F1, on a plus préférentiellement ε_{T} ≥ 7,2. On notera également que ε_{T} ≤ 8 pour les fils F1 et F2.

### TESTS ET ESSAIS COMPARATIFS

On a comparé les fils de l'état de la technique et les fils F1 et F2 au cours d'un test de flexion rotative réalisé en atmosphère humide (au moins 60% d'humidité relative). Ce test permet de mesurer la contrainte maximale d'endurance en flexion rotative en milieu humide σ_{F}* de chaque fil testé. Au cours de ce test, on impose 10⁵ cycles au fil testé autour de son axe de révolution à une contrainte prédéterminée. Si le fil rompt, on recommence le test avec une contrainte moins élevée et si le fil ne rompt pas, on recommence le test avec une contrainte plus élevée. On détermine ainsi de proche en proche, par exemple, par la méthode dite de l'escalier, la valeur de σ_{F}*. On a rassemblé les résultats de ce test dans le tableau 3 ci-dessous.

**Tableau 3**

| | **EDT1** | **EDT2** | **F1** | **F2** |
|---|---|---|---|---|
| **C(%)** | 0,71 | 0,585 | 0,03 | 0,03 |
| **d (mm)** | 0,18 | 0,18 | 0,15 | 0,18 |
| **R (MPa)** | 2820 | 2903 | 1901 | 1907 |
| **σ_{F}* (MPa)** | < 500 | < 500 | 1004 | 995 |

En milieu humide, les fils F1et F2 selon l'invention rompt à des contraintes significativement plus élevées que ceux de l'état de la technique, illustrant ainsi un des avantages de l'invention. Ainsi, même si la contrainte à rupture initiale des fils F1 et F2 selon l'invention est inférieure à celle des fils EDT1 et EDT2, l'endurance en fatigue-corrosion des fils F1 et F2est nettement supérieure à celle des fils EDT1 et EDT2.

L'invention ne se limite pas aux modes de réalisation précédemment décrits.

En effet, l'étape 200 de décalaminage peut être réalisée par action d'un agent chimique, par exemple de l'acide.

## Revendications

1. Procédé de tréfilage d'un fil d'acier (F1 ; F2) tel que défini dans la norme NF EN 10020 présentant une microstructure intégralement ferritique, un mélange de ferrite et de cémentite ou un mélange de ferrite et de perlite, **caractérisé en ce que** le fil (F1 ; F2) présente un taux de carbone en masse C tel que C<0,05 % et un taux de chrome en masse Cr tel que Cr < 12 %, le procédé comprenant :
- au moins une première série ininterrompue d'étapes (400₁ - 400ₘ) de tréfilage du fil (F1 ; F2) d'un diamètre D vers un diamètre d',
- au moins une deuxième série ininterrompue d'étapes (700₁ - 700ₘ) de tréfilage du fil (F1 ; F2) de diamètre d'vers un diamètre d,
- une ou plusieurs étapes intermédiaires entre les première et deuxième séries ininterrompues d'étapes (400₁ - 400ₘ, 700₁ - 700ₘ) de tréfilage du fil (F1 ; F2), le fil (F1 ; F2) présentant une température inférieure ou égale à 300°C lors de la ou de chaque étape intermédiaire, la ou les étapes intermédiaires comprennent une étape de revêtement (600) du fil de diamètre d' d'au moins une couche métallique, l'étape de revêtement du fil de diamètre d' est choisie parmi une étape de dépôt d'une couche d'un alliage de métaux sensiblement purs, une étape de dépôt d'une première couche d'un premier métal sensiblement pur suivie d'une étape de dépôt d'une deuxième couche d'un deuxième métal sensiblement pur, une étape de dépôt d'une couche d'un métal sensiblement pur.

2. Procédé selon l'une quelconque des revendications précédentes, dans lequel d' est supérieur ou égal à 0,5 mm,de préférence à 1 mm et plus préférentiellement 1,3 mm.

3. Procédé selon l'une quelconque des revendications précédentes, dans lequel d' est inférieur ou égal à 2,5 mm, de préférence à 2,2 mm et plus préférentiellement à 2 mm.

4. Procédé selon l'une quelconque des revendications précédentes, dans lequel d'et d étant exprimés en mm, la déformation rationnelle ε'=2 x In (d'/d) est telle que ε' > 3.

5. Procédé selon l'une quelconque des revendications précédentes, dans lequel d' et d étant exprimés en mm, la déformation rationnelle ε'=2 x ln (d'/d) est telle que ε' ≤ 5.

6. Procédé selon l'une quelconque des revendications précédentes, dans lequel D et d' étant exprimés en mm, la déformation rationnelle ε=2 x ln (D/d') est telle que ε ≥ 2.

7. Procédé selon l'une quelconque des revendications précédentes, dans lequel D et d' étant exprimés en mm, la déformation rationnelle ε=2 x ln (D/d') est telle que ε ≤ 5.

8. Procédé selon l'une quelconque des revendications précédentes, dans lequel, D et d étant exprimés en mm, la déformation rationnelle ε_{T} =2 x ln (D/d) est telle que ε_{T} ≥ 6, de préférence ε_{T} ≥ 6,5, plus préférentiellement ε_{T} ≥ 7.

9. Procédé selon l'une quelconque des revendications précédentes, dans lequel la ou les étapes intermédiaires ne comprennent pas d'étape de chauffage de l'acier au-delà de sa température d'austénitisation.

10. Procédé selon l'une quelconque des revendications précédentes, dans lequel l'étape de revêtement du fil de diamètre d' comprenant une étape de dépôt d'une première couche d'un premier métal sensiblement pur suivie d'une étape de dépôt d'une deuxième couche d'un deuxième métal sensiblement pur, la ou les étapes intermédiaires ne comprennent pas d'étape de thermodiffusion de chaque premier et deuxième métal respectivement dans la deuxième et la première couche.

11. Fil (F1 ; F2) d'acier tel que défini dans la norme NF EN10020 de diamètre d exprimé en mm et présentant une microstructure intégralement ferritique, un mélange de ferrite et de cémentite ou un mélange de ferrite et de perlite, le fil étant revêtu d'un revêtement choisi parmi une couche d'un alliage de métaux sensiblement purs et une couche d'un métal sensiblement pur, **caractérisé en ce que** le fil (F1 ; F2) présente un taux de carbone en masse C tel que C<0,05 %, un taux de chrome en masse Cr tel que Cr < 12 % et une contrainte maximale avant rupture R, exprimée en MPa, telle que R ≥ A + 910.C - 600.ln(d) avecA=200.

12. Fil (F1 ; F2) selon la revendication 11, dans lequel d est supérieur ou égal à 0,10 mm et de préférence à 0,12 mm.

13. Fil (F1 ; F2) selon la revendications 11 ou 12, dans lequel d est inférieur ou égal à 0,40 mm, de préférence à 0,25 mm, plus préférentiellement à 0,23 mm et encore plus préférentiellement à 0,20 mm.

14. Câble (C1 ; C2), **caractérisé en ce qu'**il comprend plusieurs fils (F1 ;
F2) selon l'une quelconque des revendications 11 à 13.

15. Pneumatique (10), **caractérisé en ce qu'il** comprend au moins un fil (F1 ; F2) selon l'une quelconque des revendications 11 à 13.

## Patentansprüche

1. Verfahren zum Ziehen eines Stahldrahts (F1; F2) gemäß der Begriffsbestimmung in der Norm NF EN 10020, der ein vollkommen ferritisches Mikrogefüge, eine Mischung aus Ferrit und Zementit oder eine Mischung aus Ferrit und Perlit aufweist, **dadurch gekennzeichnet, dass** der Draht (F1; F2) einen massenbezogenen Kohlenstoffgehalt C, welcher derart ist, dass C < 0,05 % ist, sowie einen massenbezogenen Chromgehalt Cr aufweist, welcher derart ist, dass Cr < 12 % ist, wobei das Verfahren Folgendes umfasst:
- mindestens eine erste ununterbrochene Abfolge von Schritten (400₁ - 400ₘ) des Ziehens des Drahts (F1; F2), von einem Durchmesser D zu einem Durchmesser d',
- mindestens eine zweite ununterbrochene Abfolge von Schritten (700₁ - 700ₘ) des Ziehens des Drahts (F1; F2), von einem Durchmesser d' zu einem Durchmesser d,
- einen oder mehrere Zwischenschritte zwischen der ersten und der zweiten ununterbrochenen Abfolge von Schritten (400₁ - 400ₘ, 700₁ - 700ₘ) des Ziehens des Drahts (F1; F2), wobei der Draht (F1; F2) bei dem Zwischenschritt oder bei jedem derselben eine Temperatur von höchstens 300 °C aufweist, wobei der oder die Zwischenschritte einen Schritt des Beschichtens (600) des Drahts, dessen Durchmesser gleich d' ist, mit mindestens einer Metallschicht umfassen, wobei der Schritt des Beschichtens des Drahts, dessen Durchmesser gleich d' ist, aus einem Schritt des Aufbringens einer Schicht einer Legierung von Wesentlichen reinen Metallen, aus einem Schritt des Aufbringens einer ersten Schicht eines ersten im Wesentlichen reinen Metalls, gefolgt von einem Schritt des Aufbringens einer zweiten Schicht eines zweiten im Wesentlichen reinen Metalls, aus einem Schritt des Aufbringens einer Schicht eines im Wesentlichen reinen Metalls ausgewählt ist.

2. Verfahren nach einem beliebigen der vorhergehenden Ansprüche, wobei d' mindestens gleich 0,5 mm, vorzugsweise 1 mm ist, wobei er stärker bevorzugt 1,3 mm beträgt.

3. Verfahren nach einem beliebigen der vorhergehenden Ansprüche, wobei d' höchstens gleich 2,5 mm, vorzugsweise 2,2 mm und stärker bevorzugt 2 mm ist.

4. Verfahren nach einem beliebigen der vorhergehenden Ansprüche, wobei die wahre Dehnung ε' = 2 x In (d'/d) derart ist, dass ε' > 3 ist, wenn d' und d in mm ausgedrückt sind.

5. Verfahren nach einem beliebigen der vorhergehenden Ansprüche, wobei die wahre Dehnung ε' = 2 x In (d'/d) derart ist, dass ε' ≤ 5 ist, wenn d' und d in mm ausgedrückt sind.

6. Verfahren nach einem beliebigen der vorhergehenden Ansprüche, wobei die wahre Dehnung ε = 2 x In (D/d') derart ist, dass ε ≥ 2 ist, wenn D und d' in mm ausgedrückt sind.

7. Verfahren nach einem beliebigen der vorhergehenden Ansprüche, wobei die wahre Dehnung ε = 2 x In (D/d') derart ist, dass ε ≤ 5 ist, wenn D und d' in mm ausgedrückt sind.

8. Verfahren nach einem beliebigen der vorhergehenden Ansprüche, wobei die wahre Dehnung ε_{T} = 2 x In (D/d) derart ist, dass ε_{T} ≥ 6 ist, vorzugsweise ε_{T} ≥ 6,5 ist, stärker bevorzugt ε_{T} ≥ 7 ist, wenn D und d in mm ausgedrückt sind.

9. Verfahren nach einem beliebigen der vorhergehenden Ansprüche, wobei der oder die Zwischenschritte keinerlei Schritt des Erhitzens des Stahls über seine Austenitisierungstemperatur hinaus umfassen.

10. Verfahren nach einem beliebigen der vorhergehenden Ansprüche, wobei der Schritt des Beschichtens des Drahts, dessen Durchmesser gleich d' ist, einen Schritt des Aufbringens einer ersten Schicht eines ersten im Wesentlichen reinen Metalls, gefolgt von einem Schritt des Aufbringens einer zweiten Schicht eines zweiten im Wesentlichen reinen Metalls umfasst, wobei der oder die Zwischenschritte keinerlei Schritt der wärmegetriebenen Diffusion des ersten oder des zweiten Metalls in die zweite beziehungsweise die erste Schicht umfasst.

11. Stahldraht (F1; F2) gemäß der Begriffsbestimmung in der Norm NF EN 10020 mit einem Durchmesser d, der in mm ausgedrückt ist, wobei er weiterhin ein vollkommen ferritisches Mikrogefüge, eine Mischung aus Ferrit und Zementit oder eine Mischung aus Ferrit und Perlit aufweist, wobei der Draht mit einer Beschichtung überzogen ist, die aus einer Schicht einer Legierung von im Wesentlichen reinen Metallen und aus einer Schicht eines im Wesentlichen reinen Metalls ausgewählt ist, **dadurch gekennzeichnet, dass** der Draht (F1; F2) einen massenbezogenen Kohlenstoffgehalt C, welcher derart ist, dass C < 0,05 % ist, einen massenbezogenen Chromgehalt Cr, welcher derart ist, dass Cr < 12 % ist, sowie eine Reißfestigkeit R aufweist, welche in MPa ausgedrückt ist und derart ist, dass R ≥ A + 910.C - 600.ln(d) ist, mit A = 200.

12. Draht (F1; F2) nach Anspruch 11, wobei d mindestens gleich 0,10 mm und vorzugsweise mindestens gleich 0,12 mm ist.

13. Draht (F1; F2) nach Anspruch 11 oder 12, wobei d höchstens gleich 0,40 mm, vorzugsweise 0,25 mm, stärker bevorzugt 0,23 mm und noch stärker bevorzugt 0,20 mm ist.

14. Seil (C1; C2), **dadurch gekennzeichnet, dass** es mehrere Drähte (F1; F2) nach einem beliebigen der Ansprüche 11 bis 13 umfasst.

15. Luftreifen (10), **dadurch gekennzeichnet, dass** er mindestens einen Draht (F1; F2) nach einem beliebigen der Ansprüche 11 bis 13 umfasst.

## Claims

1. Process for drawing a steel wire (F1; F2) as defined in Standard NF EN 10020, having a microstructure that is completely ferritic, a mixture of ferrite and cementite or a mixture of ferrite and pearlite, **characterized in that** the wire (F1; F2) has a weight content of carbon C such that C < 0.05% and a weight content of chromium Cr such that Cr < 12%, the process comprising:
- at least one first uninterrupted series of steps (400₁ - 400ₘ) of drawing the wire (F1 ; F2) from a diameter D to a diameter d',
- at least one second uninterrupted series of steps (700₁ - 700ₘ) of drawing the wire (F1 ; F2) of diameter d' to a diameter d,
- one or more intermediate steps between the first and second uninterrupted series of steps (400₁ - 400ₘ, 700₁ - 700ₘ) of drawing the wire (F1 ; F2), the wire (F1 ; F2) having a temperature less than or equal to 300°C during the or each intermediate step, the intermediate step or steps comprising a step (600) of coating the wire of diameter d' with at least one metal layer, the step of coating the wire of diameter d' is selected from a step of depositing a layer of an alloy of substantially pure metals, a step of depositing a first layer of a first substantially pure metal followed by a step of depositing a second layer of a second substantially pure metal, a step of depositing a layer of a substantially pure metal.

2. Process according to any one of the preceding claims, in which d' is greater than or equal to 0.5 mm, preferably greater than or equal to 1 mm and more preferably greater than or equal to 1.3 mm.

3. Process according to either one of the preceding claims, in which d' is less than or equal to 2.5 mm, preferably less than or equal to 2.2 mm and more preferably less than or equal to 2 mm.

4. Process according to any one of the preceding claims, in which, d' and d being expressed in mm, the true strain ε'=2.ln (d'/d) is such that ε' > 3.

5. Process according to any one of the preceding claims, in which, d' and d being expressed in mm, the true strain ε'=2.ln (d'/d) is such that ε' ≤ 5.

6. Process according to any one of the preceding claims, in which, D and d' being expressed in mm, the true strain ε=2.ln (D/d') is such that ε ≥ 2.

7. Process according to any one of the preceding claims, in which, D and d' being expressed in mm, the true strain ε=2.ln (D/d') is such that ε ≤ 5.

8. Process according to any one of the preceding claims, in which, D and d being expressed in mm, the true strain ε_{T}=2.ln (D/d) is such that ε_{T} ≥ 6, preferably ε_{T} ≥ 6.5, more preferably ε_{T} ≥ 7.

9. Process according to any one of the preceding claims, in which the intermediate step or steps do not comprise a step of heating the steel beyond its austenitizing temperature.

10. Process according to any one of the preceding claims, in which, the step of coating the wire of diameter d' comprising a step of depositing a first layer of a first substantially pure metal followed by a step of depositing a second layer of a second substantially pure metal, the intermediate step or steps do not comprise a step of thermal diffusion of each first and second metal respectively into the second and first layer.

11. Steel wire (F1 ; F2) as defined in Standard NF EN 10020 of diameter d expressed in mm and having a microstructure that is completely ferritic, a mixture of ferrite and cementite or a mixture of ferrite and pearlite, the wire being coated with a coating chosen among a layer of an alloy of substantially pure metals and a layer of a substantially pure metal, **characterized in that** the wire (F1 ; F2) has a weight content of carbon C such that C < 0.05 %, a weight content of chromium Cr such that Cr < 12% and a maximum tensile strength R, expressed in MPa, such that R ≥ A + 910.C - 600.ln(d) with A=200.

12. Wire (F1 ; F2) according to Claim 11, in which d is greater than or equal to 0.10 mm and preferably greater than or equal to 0.12 mm.

13. Wire (F1 ; F2) according to Claim 11 or 12, in which d is less than or equal to 0.40 mm, preferably less than or equal to 0.25 mm, more preferably less than or equal to 0.23 mm and more preferably still less than or equal to 0.20 mm.

14. Cord (C1 ; C2), **characterized in that** it comprises several wires (F1 ; F2) according to any one of Claims 11 to 13.

15. Tyre (10), **characterized in that** it comprises at least one wire (F1 ; F2) according to any one of Claims 11 to 13.
